# EUROPEAN PATENT APPLICATION

(11) **EP 4 528 869 A1**
(43) Date of publication of application: **26.03.2025**
(21) Application number: 24201766.3
(22) Date of filing: 20.09.2024
(51) Int. Cl.: H01M 10/0525, H01M 50/102, H01M 50/119, H01M 50/136, H01M 50/14, H01M 50/586, H01M 50/595, H01M 50/105, H01M 10/04, H01M 10/0587

(54) **SECONDARY BATTERY AND ELECTRONIC DEVICE**

(30) Priority: 20.09.2023 CN 202311223820
(71) Applicant: Dongguan Amperex Technology Limited, Dongguan City, Guangdong Province 523000 (CN)
(72) Inventor: FANG, Dekai, Dongguan City, Guangdong Province 523000 (CN)
(74) Representative: Icosa

(57) **Abstract**

A secondary battery (100) has an arc shape. The secondary battery (100) includes a housing (10), an electrode assembly (20), and a first insulation piece (30). The housing (10) includes an aluminum layer (12). The electrode assembly (20) is disposed in the housing (10). The electrode assembly (20) includes positive electrode plates (21), a separator (22), and negative electrode plates (23). The separator (22) is disposed between the positive electrode plate (21) and the negative electrode plate (23). An outermost electrode plate of the electrode assembly (20) is a first positive electrode plate (21a). An electrode plate adjacent to the first positive electrode plate (21a) is a first negative electrode plate (23a). The first negative electrode plate (23a) includes a first edge (231) in an extension direction of the arc shape of the secondary battery (100). A first blank foil region (211) exists at an end, close to the first edge (231), of the first positive electrode plate (21a). The first blank foil region (211) exceeds the first edge (231). The first insulation piece (30) covers one side, oriented toward the first negative electrode plate (23a), of the first blank foil region (211).

## Description

### TECHNICAL FIELD

This application relates to the technical field of electrochemical energy storage, and in particular, to a secondary battery and an electronic device.

### BACKGROUND

With the development of electrochemical energy storage technology, higher requirements have been put forward on the safety performance and cycle performance of secondary batteries (such as a lithium-ion battery). For example, the requirements on the safety performance of the secondary batteries are increasingly higher. Therefore, improvements in this respect still need to be made.

### SUMMARY

This application provides a secondary battery and an electronic device, and achieves relatively high safety performance.

This application is implemented through the following technical solutions:
According to a first aspect, an embodiment of this application provides a secondary battery. The secondary battery assumes an arc shape. The secondary battery includes a housing, an electrode assembly, and a first insulation piece. The housing includes an aluminum layer. The electrode assembly is disposed in the housing. The electrode assembly includes a positive electrode plate, a separator, and a negative electrode plate. The separator is disposed between the positive electrode plate and the negative electrode plate. An outermost electrode plate of the electrode assembly is a first positive electrode plate. An electrode plate adjacent to the first positive electrode plate is a first negative electrode plate. The first negative electrode plate includes a first edge in an extension direction of the arc shape of the secondary battery. A first blank foil region exists at an end, close to the first edge, of the first positive electrode plate. The first blank foil region exceeds the first edge. The first insulation piece covers one side, oriented toward the first negative electrode plate, of the first blank foil region.

In the secondary battery according to this embodiment of this application, the first insulation piece covers the first blank foil region. On the one hand, the first insulation piece can insulate the first positive electrode plate from the first negative electrode plate. On the other hand, the first insulation piece can block the burrs on the first edge, and reduce the probability of the burrs contacting the aluminum layer of the housing, thereby reducing the risk of chemical corrosion caused by the contact between the burrs and the aluminum layer, and endowing the secondary battery with relatively high safety performance.

According to some embodiments of this application, the first positive electrode plate includes a positive electrode substrate layer and a positive active material layer applied to a surface of the positive electrode substrate layer. A region, uncoated with the positive active material layer, of the first positive electrode plate includes the first blank foil region. The first negative electrode plate includes a negative electrode substrate layer and a negative active material layer applied to a surface of the negative electrode substrate layer. In the extension direction of the arc shape of the secondary battery, the negative active material layer exceeds the positive active material layer by a dimension L₁ at one end of the electrode assembly at which the first insulation piece is disposed. The separator disposed between the first positive electrode plate and the first negative electrode plate exceeds the negative active material layer by a dimension L₂. A dimension of the first blank foil region is L₃, satisfying: L₁ ≤ L₃ ≤ L₂.

In the above technical solution, the dimension L₁ by which the negative active material layer exceeds the positive active material layer, the dimension L₂ by which the separator disposed between the first positive electrode plate and the first negative electrode plate exceeds the negative active material layer, and the dimension L₃ of the first blank foil region in the extension direction of the arc shape of the secondary battery satisfy the above relationship (Li ≤ L₃ ≤ L₂). The above arrangement can reduce the risk of lithium plating in the lithium-ion battery on the one hand, and reduce the risk of short-circuiting caused by the contact between the positive electrode and the negative electrode on the other hand.

According to some embodiments of this application, the secondary battery further includes a positive tab. Along the extension direction of the arc shape of the secondary battery, the positive tab and the first blank foil region are located at the same end of the electrode assembly. A dimension of an overlapping region between the first insulation piece and the first blank foil region is L₄, satisfying: 1.02 mm ≤ L₄ ≤ 2 mm.

In the above technical solution, the positive tab and the first blank foil region are located at the same end of the electrode assembly in the extension direction of the arc shape of the secondary battery, and the dimension L₄ of the overlapping region between the first insulation piece and the first blank foil region in the extension direction of the arc shape of the secondary battery satisfies the above relationship (1.02 mm ≤ L₄ ≤ 2 mm). The above arrangement can effectively block the burrs on the first edge on the one hand, and save material and reduce cost on the other hand.

According to some embodiments of this application, a part of the first insulation piece overlaps the positive active material layer. Along the extension direction of the arc shape of the secondary battery, a dimension of an overlapping region between the first insulation piece and the positive active material layer is C₁, satisfying: 0 ≤ C₁ ≤ 0.5 mm.

In the above technical solution, the first insulation piece extends until the first insulation piece overlaps the positive active material layer. With the first insulation piece blocking the burrs on the first edge, the risk of the burrs contacting the positive active material layer is reduced.

According to some embodiments of this application, along a thickness direction of the first positive electrode plate, a dimension of the first insulation piece is H₁, and a dimension of the separator is H₂, satisfying: 30 µm ≤ H₁ + H₂ ≤ 65.5 µm.

In the above technical solution, the dimension H₁ of the first insulation piece along the thickness direction of the first positive electrode plate and the dimension H₂ of the separator along the thickness direction of the first positive electrode plate satisfy the above relationship (30 µm ≤ H₁ + H₂ ≤ 65.5 µm). On the one hand, the above arrangement can reduce the risk of short-circuiting caused by the contact between the burrs on the first edge and the first blank foil region. On the other hand, the first insulation piece and the separator fitted together occupy just a relatively small space in the thickness direction of the first positive electrode plate.

According to some embodiments of this application, 10 µm ≤ H₁ ≤ 40 µm.

In the above technical solution, the dimension H₁ of the first insulation piece along the thickness direction of the first positive electrode plate satisfies the above relationship (10 µm ≤ H₁ ≤ 40 µm). On the one hand, the above arrangement can effectively reduce the risk of short-circuiting caused by the contact between the burrs on the first edge and the first blank foil region. On the other hand, the first insulation piece occupies just a relatively small space in the thickness direction of the first positive electrode plate.

According to some embodiments of this application, the first insulation piece is an insulation coating applied to the first blank foil region. Constituents of the insulation coating include at least one of aluminum oxide, zinc oxide, calcium oxide, silicon oxide, zirconium oxide, magnesium oxide, titanium oxide, hafnium dioxide, tin oxide, cerium dioxide, nickel oxide, yttrium oxide, silicon carbide, aluminum hydroxide, magnesium hydroxide, calcium hydroxide, barium sulfate, or boehmite.

In the above technical solution, the insulation coating exhibits a relatively high insulation effect.

According to some embodiments of this application, the first insulation piece is adhesive tape bonded to the first blank foil region.

In the above technical solution, the first insulation piece is adhesive tape bonded to the first blank foil region, thereby simplifying the structure and facilitating the operation.

According to some embodiments of this application, peel strength between the first insulation piece and the first blank foil region is greater than 0.1 N/mm.

In the above technical solution, the peel strength between the first insulation piece and the first blank foil region is greater than 0.1 N/mm, thereby reducing the risk of the adhesive tape being detached from the first blank foil region.

According to some embodiments of this application, the first positive electrode plate further includes a second blank foil region. In the extension direction of the arc shape of the secondary battery, the second blank foil region and the first blank foil region are located at two ends of the first positive electrode plate respectively. The secondary battery further includes a second insulation piece. The second insulation piece covers one side, oriented toward the first negative electrode plate, of the second blank foil region.

In the above technical solution, the second blank foil region and the first blank foil region are located at the two ends of the first positive electrode plate in the extension direction of the arc shape of the secondary battery respectively. The second insulation piece covers one side, oriented toward the first negative electrode plate, of the second blank foil region, thereby improving the effect of blocking the burrs, and improving the safety performance of the electronic device.

According to some embodiments of this application, the first positive electrode plate includes a positive electrode substrate layer and a positive active material layer applied to a surface of the positive electrode substrate layer. A region, uncoated with the positive active material layer, of the first positive electrode plate includes the first blank foil region and the second blank foil region. The first negative electrode plate includes a negative electrode substrate layer and a negative active material layer applied to a surface of the negative electrode substrate layer. In the extension direction of the arc shape of the secondary battery, the negative active material layer exceeds the positive active material layer by a dimension L₅ at one end of the electrode assembly at which the second insulation piece is disposed. The separator disposed between the first positive electrode plate and the first negative electrode plate exceeds the negative active material layer by a dimension L₆. A dimension of the second blank foil region is L₇, satisfying: L₅ ≤ L₇ ≤ L₆.

In the above technical solution, the dimension L₅ by which the negative active material layer exceeds the positive active material layer, the dimension L₆ by which the separator disposed between the first positive electrode plate and the first negative electrode plate exceeds the negative active material layer, and the dimension L₇ of the second blank foil region in the extension direction of the arc shape of the secondary battery satisfy the above relationship (L₅ ≤ L₇ ≤ L₆). The above arrangement can reduce the risk of lithium plating in the lithium-ion battery on the one hand, and reduce the risk of short-circuiting caused by the contact between the positive electrode and the negative electrode on the other hand.

According to some embodiments of this application, the secondary battery further includes a positive tab. Along the extension direction of the arc shape of the secondary battery, the positive tab and the first blank foil region are located at the same end of the electrode assembly. A dimension of an overlapping region between the second insulation piece and the second blank foil region is L₈, satisfying: 0.55 mm ≤ L₈ ≤ 1.35 mm.

In the above technical solution, the positive tab and the first blank foil region are located at the same end of the electrode assembly in the extension direction of the arc shape of the secondary battery, and the dimension L₈ of the overlapping region between the second insulation piece and the second blank foil region in the extension direction of the arc shape of the secondary battery satisfies the above relationship (0.55 mm ≤ L₈ ≤ 1.35 mm). The above arrangement can effectively block the burrs on an edge of the first negative electrode plate on the one hand, the edge corresponding to the second blank foil region, and save material and reduce cost on the other hand.

According to some embodiments of this application, a part of the second insulation piece overlaps the positive active material layer. Along the extension direction of the arc shape of the secondary battery, a dimension of an overlapping region between the second insulation piece and the positive active material layer is C₂, satisfying: 0 ≤ C₂ ≤ 0.5 mm.

In the above technical solution, the second insulation piece extends until the first insulation piece overlaps the positive active material layer. With the second insulation piece blocking the burrs of the first negative electrode plate, the risk of the burrs contacting the positive active material layer is reduced.

According to some embodiments of this application, the housing is an aluminum laminated film. The aluminum laminated film includes a protection layer, an aluminum layer, and a sealing layer that are stacked together.

In the above technical solution, the aluminum plastic film is of relatively high strength and flexibility, and meets the use requirements.

According to some embodiments of this application, the sealing layer includes at least one of polyethylene terephthalate, polyvinyl chloride, polyethylene, or polypropylene.

In the above technical solution, the polyethylene terephthalate, polyvinyl chloride, polyethylene, or polypropylene exhibits good sealing performance.

According to some embodiments of this application, a thickness of the sealing layer is 20 µm to 40 µm.

In the above technical solution, the sealing layer is of a specified thickness, and can reduce the risk of the burrs contacting the aluminum layer. In addition, the overall thickness of the housing is relatively small, thereby endowing the secondary battery with a relatively high volumetric energy density.

According to some embodiments of this application, the electrode assembly is a stacked-type structure. The first negative electrode plate further includes a second edge, a third edge, and a fourth edge. The second edge and the first edge are located at two ends of the first negative electrode plate along a first direction respectively. The third edge and the fourth edge are located at two ends of the first negative electrode plate along a second direction respectively. The first direction is perpendicular to the second direction. A second blank foil region exists on the first positive electrode plate at one end close to the second edge. The second blank foil region exceeds the second edge. A third blank foil region exists on the first positive electrode plate at one end close to the third edge. The third blank foil region exceeds the third edge. A fourth blank foil region exists on the first positive electrode plate at one end close to the fourth edge. The fourth blank foil region exceeds the fourth edge. The secondary battery further includes a second insulation piece, a third insulation piece, and a fourth insulation piece. The second insulation piece covers one side, oriented toward the first negative electrode plate, of the second blank foil region. The third insulation piece covers one side, oriented toward the first negative electrode plate, of the third blank foil region. The fourth insulation piece covers one side, oriented toward the first negative electrode plate, of the fourth blank foil region.

In the above technical solution, the second insulation piece, the third insulation piece, and the fourth insulation piece can reduce the risk of short-circuiting caused by contact between the first positive electrode plate and the first negative electrode plate. In addition, the second insulation piece can block the burrs on the second edge. The third insulation piece can block the burrs on the third edge. The fourth insulation piece can block the burrs on the fourth edge, thereby reducing the risk of chemical corrosion caused by contact between the burrs and the aluminum layer of the housing, and further improving the safety performance of the secondary battery.

According to some embodiments of this application, the electrode assembly is a jelly-roll structure.

In the above technical solution, the electrode assembly is a jelly-roll structure, thereby facilitating processing and manufacturing.

According to some embodiments of this application, a width of an outermost positive electrode plate of the electrode assembly is greater than a width of any other positive electrode plate of the electrode assembly, or a width of the positive electrode plate is greater than or equal to a width of the negative electrode plate.

In the above technical solution, when the width of the outermost positive electrode plate is greater than the width of any other positive electrode plate, the first blank foil region is located on the outermost positive electrode plate, thereby facilitating the disposition of the first insulation piece. The burrs of the first negative electrode plate are blocked by the first insulation piece, thereby reducing the risk of the burrs contacting the aluminum layer of the housing. The width of the positive electrode plate being greater than or equal to the width of the negative electrode plate facilitates processing and manufacturing.

According to a second aspect, an embodiment of this application further provides an electrical device. The electrical device contains the secondary battery disclosed in any one of the above embodiments.

Additional aspects and advantages of this application will be partly given in the following description, and a part thereof will become evident in the following description or will be learned in the practice of this application.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a secondary battery according to some embodiments of this application;
FIG. 2 is a schematic assembling diagram of a first positive electrode plate and a first negative electrode plate according to some embodiments of this application;
FIG. 3 is a close-up view of a part A shown in FIG. 2;
FIG. 4 is a schematic assembling diagram of a first insulation piece and a positive active material layer according to some embodiments of this application;
FIG. 5 is a close-up view of a part B shown in FIG. 2;
FIG. 6 is a schematic assembling diagram of a second insulation piece and a positive active material layer according to some embodiments of this application;
FIG. 7 is a schematic structural diagram of a housing according to some embodiments of this application; and
FIG. 8 is a schematic structural diagram of an electrode assembly according to some embodiments of this application.

List of reference numerals: 100-secondary battery; 10-housing; 11-protection layer; 12-aluminum layer; 13-sealing layer; 20-electrode assembly; 21-positive electrode plate; 21a-first positive electrode plate; 211-first blank foil region; 212-positive electrode substrate layer; 213-positive active material layer; 214-second blank foil region; 215-third blank foil region; 216-fourth blank foil region; 22-separator; 22a-first separator; 23-negative electrode plate; 23a-first negative electrode plate; 231-first edge; 232-negative electrode substrate layer; 233-negative active material layer; 234-second edge; 235-third edge; 236-fourth edge; 30-first insulation piece; 40-positive tab; 50-second insulation piece; 60-third insulation piece; 70-fourth insulation piece; W-extension direction of the arc shape of the secondary battery; X-first direction; Y-second direction; Z-thickness direction of the electrode assembly.

### DETAILED DESCRIPTION OF EMBODIMENTS

To make the objectives, technical solutions, and advantages of some embodiments of this application clearer, the following gives a clear and complete description of the technical solutions in some embodiments of this application with reference to the drawings in some embodiments of this application. Apparently, the described embodiments are merely a part of but not all of the embodiments of this application. All other embodiments derived by a person of ordinary skill in the art based on the embodiments of this application without making any creative effort fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

"A plurality of" referred to in this application means two or more (including two). Similarly, "a plurality of groups" means two or more groups (including two groups), and "a plurality of pieces" means two or more pieces (including two pieces).

In some embodiments, in order to meet the practical requirements, a secondary battery assumes an arc shape. For example, the secondary battery is arched on one side of an electrode assembly in a thickness direction of the electrode assembly, and the secondary battery is recessed on the other side of the electrode assembly in the thickness direction. The electrode assembly is accommodated in the housing. The housing includes an aluminum layer. During the manufacture of an electrode plate, burrs are generated on the edge of the electrode plate due to cutting. However, in the secondary battery, a negative electrode plate usually exceeds the edge of a positive electrode plate to meet the safety performance requirements. However, during bending of the secondary battery, the separator is stretched and the housing is stretched. Therefore, after the secondary battery is bent into an arc shape, the separator is prone to be punctured by the burrs of the negative electrode plate, the burrs are prone to overlap the aluminum layer of the housing, and the housing is prone to be corroded and leak, thereby impairing the safety performance of the secondary battery.

In view of this, this application provides a secondary battery. In the secondary battery, a first blank foil region is disposed on an outermost first positive electrode plate of an electrode assembly. The first blank foil region exceeds a first edge of a first negative electrode plate. Along a thickness direction of the electrode assembly, a projection of the first edge falls into the first blank foil region. A first insulation piece is disposed on one side, oriented toward the first negative electrode plate, of the first blank foil region. The first insulation piece can block the burrs on the first edge, thereby reducing the risk that the burrs lap the aluminum layer of the housing, and endowing the secondary battery with relatively high safety performance.

The following describes the structure of a secondary battery according to an embodiment of this application with reference to drawings.

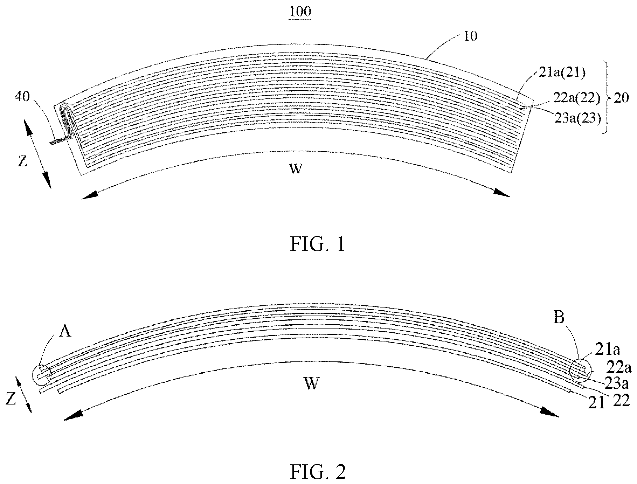

Referring to FIG. 1 to FIG. 3, an embodiment of this application provides a secondary battery 100. The secondary battery 100 assumes an arc shape. The secondary battery 100 includes a housing 10, an electrode assembly 20, and a first insulation piece 30. The housing 10 includes an aluminum layer. The electrode assembly 20 is disposed in the housing 10. The electrode assembly 20 includes a positive electrode plate 21, a separator 22, and a negative electrode plate 23. The separator 22 is disposed between the positive electrode plate 21 and the negative electrode plate 23. An outermost electrode plate of the electrode assembly 20 is a first positive electrode plate 21a. An electrode plate adjacent to the first positive electrode plate 21a is a first negative electrode plate 23a. The first negative electrode plate 23a includes a first edge 231 in an extension direction W of the arc shape of the secondary battery 100. A first blank foil region 211 exists at an end, close to the first edge 231, of the first positive electrode plate 21a. The first blank foil region 211 exceeds the first edge 231. The first insulation piece 30 covers one side, oriented toward the first negative electrode plate 23a, of the first blank foil region 211.

An accommodation space is formed in the housing 10 to accommodate the electrode assembly 20 and an electrolyte solution. The housing 10 includes an aluminum layer to endow the housing 10 with specified strength and further isolate moisture. The housing 10 may include an aluminum laminated film or an aluminum shell.

In the electrode assembly 20, a plurality of electrode plates are stacked along the thickness direction Z of the electrode assembly 20. The separator 22 is disposed between adjacent positive electrode plate 21 and negative electrode plate 23 to insulate the positive electrode plate 21 from the negative electrode plate 23.

The electrode assembly 20 may be a stacked-type structure or a jelly-roll structure.

The outermost electrode plate of the electrode assembly 20 means an electrode plate layer that is farthest away from the circular arc center of the secondary battery 100 among a plurality of electrode plate layers of the electrode assembly 20 in the thickness direction Z of the electrode assembly 20.

The first negative electrode plate 23a is an electrode plate adjacent to the first positive electrode plate 21a, that is, an electrode plate next to the outermost layer of the electrode assembly 20.

The first edge 231 is an edge of the first negative electrode plate 23a at one end in the extension direction W of the arc shape of the secondary battery 100.

The first blank foil region 211 is disposed at one end of the first positive electrode plate 21a in the extension direction W of the arc shape of the secondary battery 100. The position of the first blank foil region 211 corresponds to the first edge 231.

The first blank foil region 211 exceeds the first edge 231. Along the thickness direction Z of the electrode assembly 20, an orthographic projection of the first edge 231 falls into the first blank foil region 211.

That the first insulation piece 30 covers the first blank foil region 211 means that the first blank foil region 211 is fully covered by the first insulation piece 30 to reduce the risk of contact between the first positive electrode plate 21a and the first negative electrode plate 23a.

In the secondary battery 100 according to this embodiment of this application, the first insulation piece 30 covers the first blank foil region 211. On the one hand, the first insulation piece can insulate the first positive electrode plate 21a from the first negative electrode plate 23a. On the other hand, the first insulation piece 30 can block the burrs on the first edge 231, and reduce the probability of the burrs contacting the aluminum layer of the housing 10, thereby reducing the risk of electrochemical corrosion caused by the contact between the burrs and the aluminum layer, and endowing the secondary battery 100 with relatively high safety performance.

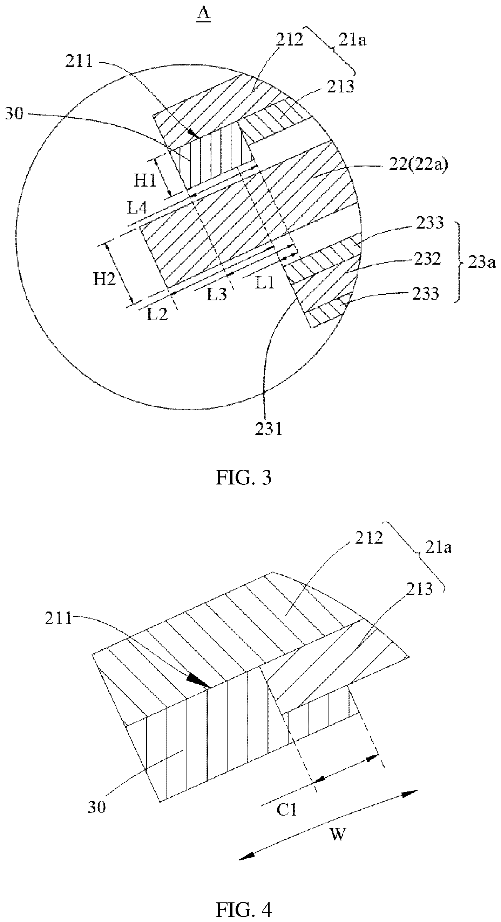

Referring to FIG. 3, according to some embodiments of this application, the first positive electrode plate 21a includes a positive electrode substrate layer 212 and a positive active material layer 213 applied to a surface of the positive electrode substrate layer 212. A region, uncoated with the positive active material layer 213, of the first positive electrode plate 21a includes the first blank foil region 211. The first negative electrode plate 23a includes a negative electrode substrate layer 232 and a negative active material layer 233 applied to a surface of the negative electrode substrate layer 232. In the extension direction W of the arc shape of the secondary battery 100, the negative active material layer 233 exceeds the positive active material layer 213 by a dimension L₁ at one end of the electrode assembly 20 at which the first insulation piece 30 is disposed. The separator 22 disposed between the first positive electrode plate 21a and the first negative electrode plate 23a exceeds the negative active material layer 233 by a dimension L₂. A dimension of the first blank foil region 211 is L₃, satisfying: L₁ ≤ L₃ ≤ L₂.

In the first positive electrode plate 21a, the positive active material layer 213 is disposed on one side, oriented toward the first negative electrode plate 23a, of the positive electrode substrate layer 212.

The region uncoated with the positive active material layer 213 on the first positive electrode plate 21a may include the first blank foil region 211 alone, or may further include other blank foil regions different from the first blank foil region 211.

The negative active material layer 233 may be applied onto two surfaces of the negative electrode substrate layer 232, where the two surfaces are opposite to each other in the thickness direction of the negative electrode substrate layer 232.

L₁ means the dimension by which the negative active material layer 233 exceeds the positive active material layer 213 in the extension direction W of the arc shape of the secondary battery 100 at one end of the electrode assembly 20 at which the first insulation piece 30 is disposed. The negative active material layer 233 exceeds the positive active material layer 213 so as to reduce the risk of lithium plating in the lithium-ion battery.

It is defined that the separator 22 between the first positive electrode plate 21a and the first negative electrode plate 23a is a first separator 22a. L₂ means the dimension by which the first separator 22a exceeds the negative active material layer 233 in the extension direction W of the arc shape of the secondary battery 100 at one end of the electrode assembly 20 at which the first insulation piece 30 is disposed. The first separator 22a exceeds the negative active material layer 233 so as to reduce the risk of short-circuiting caused by the contact between the positive electrode and the negative electrode.

L₃ means the dimension of the first blank foil region 211 in the extension direction W of the arc shape of the secondary battery 100.

In the above technical solution, the dimension L₁ by which the negative active material layer 233 exceeds the positive active material layer 213, the dimension L₂ by which the separator 22 disposed between the first positive electrode plate 21a and the first negative electrode plate 23a exceeds the negative active material layer 233, and the dimension L₃ of the first blank foil region 211 in the extension direction W of the arc shape of the secondary battery 100 satisfy the above relationship (Li ≤ L₃ ≤ L₂). The above arrangement can reduce the risk of lithium plating in the lithium-ion battery on the one hand, and reduce the risk of short-circuiting caused by the contact between the positive electrode and the negative electrode on the other hand.

According to some embodiments of this application, the secondary battery 100 further includes a positive tab 40. Along the extension direction W of the arc shape of the secondary battery 100, the positive tab 40 and the first blank foil region 211 are located at the same end of the electrode assembly 20. The dimension of an overlapping region between the first insulation piece 30 and the first blank foil region 211 is L₄, satisfying: 1.02 mm ≤ L₄ ≤ 2 mm.

The positive tab 40 is electrically connected to the positive electrode plate 21 to facilitate output of electrical energy from the electrode assembly 20.

The positive tab 40 and the first blank foil region 211 are located at the same end of the electrode assembly 20 to facilitate connection to an external component.

In the above technical solution, the positive tab 40 and the first blank foil region 211 are located at the same end of the electrode assembly 20 in the extension direction W of the arc shape of the secondary battery 100. The dimension L₄ of the overlapping region between the first insulation piece 30 and the first blank foil region 211 in the extension direction W of the arc shape of the secondary battery 100 satisfies the above relationship (1.02 mm ≤ L₄ ≤ 2 mm). The above arrangement can block the burrs on the first edge 231 effectively on the one hand, and save material and reduce cost on the other hand.

According to some embodiments of this application, the secondary battery 100 further includes a positive tab 40. Along the extension direction W of the arc shape of the secondary battery 100, the positive tab 40 and the first blank foil region 211 are located at the two ends of the electrode assembly 20 respectively. The dimension of an overlapping region between the first insulation piece 30 and the first blank foil region 211 is L₄, satisfying: 1.02 mm ≤ L₄ ≤ 2 mm.

The positive tab 40 and the first blank foil region 211 are located at the two ends of the electrode assembly 20 respectively along the extension direction W of the arc shape of the secondary battery 100. The positive tab 40 is configured to be electrically connected to an external component to output the electrical energy of the electrode assembly 20.

In the above technical solution, the positive tab 40 and the first blank foil region 211 are located at the two ends of the electrode assembly 20 respectively in the extension direction W of the arc shape of the secondary battery 100. The dimension L₄ of the overlapping region between the first insulation piece 30 and the first blank foil region 211 in the extension direction W of the arc shape of the secondary battery 100 satisfies the above relationship (1.02 mm ≤ L₄ ≤ 2 mm). The above arrangement can block the burrs on the first edge 231 effectively on the one hand, and save material and reduce cost on the other hand.

Optionally, L₄ may be 1.02 mm, 1.1 mm, 1.2 mm, 1.3 mm, 1.4 mm, 1.5 mm, 1.6 mm, 1.7 mm, 1.8 mm, 1.9 mm, 2 mm, or the like.

Referring to FIG. 4, according to some embodiments of this application, a part of the first insulation piece 30 overlaps the positive active material layer 213. Along the extension direction W of the arc shape of the secondary battery 100, the dimension of an overlapping region between the first insulation piece 30 and the positive active material layer 213 is C₁, satisfying: 0 ≤ C₁ ≤ 0.5 mm.

The first insulation piece 30 covers the first blank foil region 211 and extends to the positive active material layer 213 in the extension direction W of the arc shape of the secondary battery 100, so that a part of the first insulation piece 30 overlaps the positive active material layer 213.

When C₁ is equal to 0, the first insulation piece 30 extends until the first insulation piece contacts the end face of the positive active material layer 213.

In the above technical solution, the first insulation piece 30 extends until the first insulation piece overlaps the positive active material layer 213. With the first insulation piece 30 blocking the burrs on the first edge 231, the risk of the burrs contacting the positive active material layer 213 is reduced.

Optionally, C₁ may be 0, 0.05 mm, 0.1 mm, 0.15 mm, 0.2 mm, 0.25 mm, 0.3 mm, 0.35 mm, 0.4 mm, 0.45 mm, 0.5 mm, or the like.

Referring to FIG. 3, according to some embodiments of this application, along the thickness direction of the first positive electrode plate 21a, the dimension of the first insulation piece 30 is H₁, and the dimension of the separator 22 is H₂, satisfying: 30 µm ≤ H₁ + H₂ ≤ 65.5 µm.

The thickness direction of the first positive electrode plate 21a may be parallel to the thickness direction Z of the electrode assembly 20.

The thickness direction of the first insulation piece 30 may be parallel to the thickness direction of the first positive electrode plate 21a, and H₁ may also be the thickness of the first insulation piece 30.

The thickness direction of the separator 22 may be parallel to the thickness direction of the first positive electrode plate 21a, and H₂ may also be the thickness of the separator 22.

H₁+H₂ means a sum of the dimensions of the first insulation piece 30 and the separator 22 stacked up when viewed along the thickness direction of the first positive electrode plate 21a. At the corresponding position of the first insulation piece 30, the first separator 22a disposed between the first positive electrode plate 21a and the first negative electrode plate 23a serves as a first layer of obstruction against the burrs on the first edge 231. The first insulation piece 30 serves as a second layer of obstruction against the burrs.

In the above technical solution, the dimension H₁ of the first insulation piece 30 along the thickness direction of the first positive electrode plate 21a and the dimension H₂ of the separator 22 along the thickness direction of the first positive electrode plate 21a satisfy the above relationship (30 µm ≤ H₁ + H₂ ≤ 65.5 µm). On the one hand, the above arrangement can reduce the risk of short-circuiting caused by the contact between the burrs 231 on the first edge 231 and the first blank foil region 211. On the other hand, the first insulation piece 30 and the separator 22 fitted together occupy just a relatively small space in the thickness direction of the first positive electrode plate 21a.

Optionally, H₁+H₂ may be 30 µm, 32.5 µm, 35 µm, 37.5 µm, 40 µm, 42.5 µm, 45 µm, 47.5 µm, 50 µm, 52.5 µm, 55 µm, 57.5 µm, 60 µm, 62.5 µm, 65 µm, 65.5 µm, or the like.

According to some embodiments of this application, 10 µm ≤ H₁ ≤ 40 µm.

Optionally, H₁ may be 10 µm, 12 µm, 14 µm, 16 µm, 18 µm, 20 µm, 22 µm, 24 µm, 26 µm, 28 µm, 30 µm, 32 µm, 34 µm, 36 µm, 38 µm, 40 µm, or the like.

In the above technical solution, the dimension H₁ of the first insulation piece 30 along the thickness direction of the first positive electrode plate 21a satisfies the above relationship (10 µm ≤ H₁ ≤ 40 µm). On the one hand, the above arrangement can effectively reduce the risk of short-circuiting caused by the contact between the burrs on the first edge 231 and the first blank foil region 211. On the other hand, the first insulation piece 30 occupies just a relatively small space in the thickness direction of the first positive electrode plate 21a.

According to some embodiments of this application, the first insulation piece 30 is an insulation coating applied to the first blank foil region 211. Constituents of the insulation coating include at least one of aluminum oxide, zinc oxide, calcium oxide, silicon oxide, zirconium oxide, magnesium oxide, titanium oxide, hafnium dioxide, tin oxide, cerium dioxide, nickel oxide, yttrium oxide, silicon carbide, aluminum hydroxide, magnesium hydroxide, calcium hydroxide, barium sulfate, or boehmite.

In the above technical solution, the insulation coating exhibits a relatively high insulation effect.

According to some embodiments of this application, the first insulation piece 30 is adhesive tape bonded to the first blank foil region 211.

The adhesive tape includes a substrate and an adhesive layer. Both the substrate and the adhesive layer are made of insulation materials. The substrate is connected to the first blank foil region 211 through the adhesive layer.

In the above technical solution, the first insulation piece 30 is adhesive tape bonded to the first blank foil region 211, thereby simplifying the structure and facilitating the operation.

According to some embodiments of this application, the peel strength between the first insulation piece 30 and the first blank foil region 211 is greater than 0.1 N/mm.

In the above technical solution, the peel strength between the first insulation piece 30 and the first blank foil region 211 is greater than 0.1 N/mm, thereby reducing the risk of the adhesive tape being detached from the first blank foil region 211.

A method for testing the peel strength is described below.

The peel strength of the bonding piece of a lithium-ion battery is measured with reference to the standard GB/T 2792-2014 *Measurement of Peel Adhesion Properties for Adhesive Tapes.*
(1) Cutting the first insulation piece bonded to the first blank foil region into strip specimens of 0.2 mm × 0.6 mm in size, with the length of the specimens being adjustable proportionally based on the actual situation.
(2) Affixing the specimen onto a steel sheet by use of double-sided tape (Nitto 5000NS) along the length direction of the specimen, where the bonding length is not less than 0.4 mm.
(3) Fixing the steel sheet to a corresponding position of a GoTech tensile machine, and pulling up the other end of the specimen, where the other end is not bonded to the first blank foil region on the first insulation piece. Putting the specimen into a chuck to clamp the specimen. Leaving the pulled-up part of the specimen to be at an 180° spatial angle to the steel sheet. Pulling the specimen at a speed of 5±0.2 mm/s through the chuck. Ultimately, recording the average of tensile forces in a steady region as the peel strength.

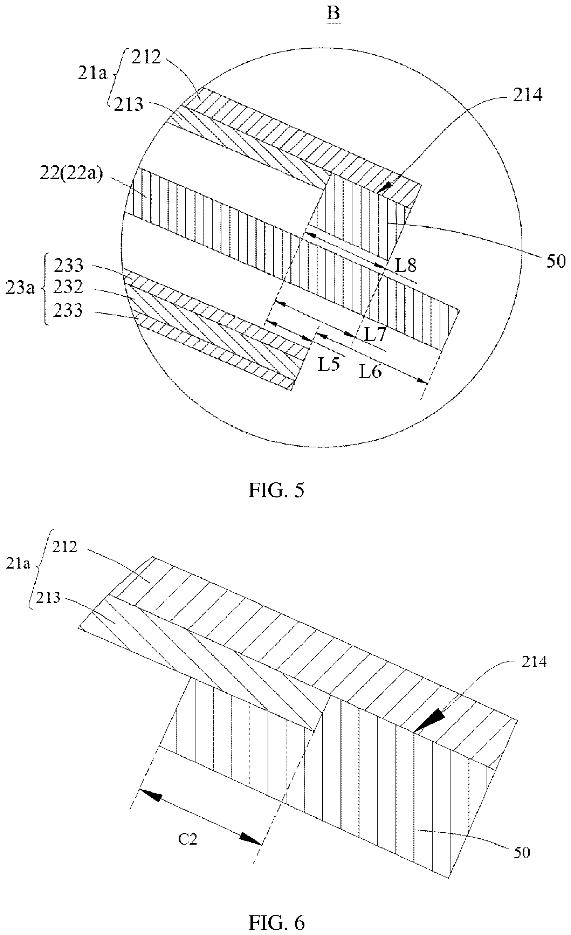

Referring to FIG. 2 and FIG. 5, according to some embodiments of this application, the first positive electrode plate 21a further includes a second blank foil region 214. In the extension direction W of the arc shape of the secondary battery 100, the second blank foil region 214 and the first blank foil region 211 are located at two ends of the first positive electrode plate 21a respectively. The secondary battery 100 further includes a second insulation piece 50. The second insulation piece 50 covers one side, oriented toward the first negative electrode plate 23a, of the second blank foil region 214.

The first blank foil region 211 and the second blank foil region 214 are both regions, uncoated with the positive active material layer 213, of the first positive electrode plate 21a. The second blank foil region 214 and the first blank foil region 211 are located at two ends of the first positive electrode plate 21a respectively in the extension direction W of the arc shape of the secondary battery 100.

The second insulation piece 50 covers one side, oriented toward the first negative electrode plate 23a, of the second blank foil region 214. The second insulation piece 50 covers the entire second blank foil region 214 to form an insulation structure between the second blank foil region 214 and the first negative electrode plate 23a.

The first negative electrode plate 23a further includes a second edge. The second edge corresponds to the second blank foil region 214. Along the extension direction W of the arc shape of the secondary battery 100, the second blank foil region 214 exceeds the second edge. Along the thickness direction Z of the electrode assembly 20, the orthographic projection of the second edge falls into the second blank foil region 214.

In the above technical solution, the second blank foil region 214 and the first blank foil region 211 are located at the two ends of the first positive electrode plate 21a respectively in the extension direction W of the arc shape of the secondary battery 100. The second insulation piece 50 covers one side, oriented toward the first negative electrode plate 23a, of the second blank foil region 214, thereby improving the effect of blocking the burrs of the first negative electrode plate 23a, and improving the safety performance of the electronic device.

Referring to FIG. 5, according to some embodiments of this application, the first positive electrode plate 21a includes a positive electrode substrate layer 212 and a positive active material layer 213 applied to a surface of the positive electrode substrate layer 212. A region, uncoated with the positive active material layer 213, of the first positive electrode plate 21a includes the first blank foil region 211 and a second blank foil region 214. The first negative electrode plate 23a includes a negative electrode substrate layer 232 and a negative active material layer 233 applied to a surface of the negative electrode substrate layer 232. In the extension direction W of the arc shape of the secondary battery 100, the negative active material layer 233 exceeds the positive active material layer 213 by a dimension L₅ at one end of the electrode assembly 20 at which the second insulation piece 50 is disposed. The separator 22 disposed between the first positive electrode plate 21a and the first negative electrode plate 23a exceeds the negative active material layer 233 by a dimension L₆. The dimension of the second blank foil region 214 is L₇, satisfying: L₅ ≤ L₇ ≤ L₆.

In the first positive electrode plate 21a, the positive active material layer 213 is disposed on one side, oriented toward the first negative electrode plate 23a, of the positive electrode substrate layer 212. The first blank foil region 211 and the second blank foil region 214 are both regions, uncoated with the positive active material layer 213, of the first positive electrode plate 21a. The first blank foil region 211 and the second blank foil region 214 are located at two ends of the first positive electrode plate 21a respectively in the extension direction W of the arc shape of the secondary battery 100.

L₅ means the dimension by which the negative active material layer 233 exceeds the positive active material layer 213 in the extension direction W of the arc shape of the secondary battery 100 at one end of the electrode assembly 20 at which the second insulation piece 50 is disposed. The negative active material layer 233 exceeds the positive active material layer 213 so as to reduce the risk of lithium plating in the lithium-ion battery.

It is defined that the separator 22 between the first positive electrode plate 21a and the first negative electrode plate 23a is a first separator 22a. L₆ means the dimension by which the first separator 22a exceeds the negative active material layer 233 in the extension direction W of the arc shape of the secondary battery 100 at one end of the electrode assembly 20 at which the second insulation piece 50 is disposed. The first separator 22a exceeds one end of the negative active material layer 233, the end corresponding to the second blank foil region 214, so as to reduce the risk of short-circuiting caused by the contact between the positive electrode and the negative electrode.

L₇ means the dimension of the second blank foil region 214 in the extension direction W of the arc shape of the secondary battery 100.

In the above technical solution, the dimension L₅ by which the negative active material layer 233 exceeds the positive active material layer 213, the dimension L₆ by which the separator 22 disposed between the first positive electrode plate 21a and the first negative electrode plate 23a exceeds the negative active material layer 233, and the dimension L₇ of the second blank foil region 214 in the extension direction W of the arc shape of the secondary battery 100 satisfy the above relationship (L₅ ≤ L₇ ≤ L₆). The above arrangement can reduce the risk of lithium plating in the lithium-ion battery on the one hand, and reduce the risk of short-circuiting caused by the contact between the positive electrode and the negative electrode on the other hand.

Referring to FIG. 1 and FIG. 5, according to some embodiments of this application, the secondary battery 100 further includes a positive tab 40. Along the extension direction W of the arc shape of the secondary battery 100, the positive tab 40 and the first blank foil region 211 are located at the same end of the electrode assembly 20. The dimension of an overlapping region between the second insulation piece 50 and the second blank foil region 214 is L₈, satisfying: 0.55 mm ≤ L₈ ≤ 1.35 mm.

The positive tab 40 is electrically connected to the positive electrode plate 21 to facilitate output of electrical energy from the electrode assembly 20. The positive tab 40 and the second blank foil region 214 are located at the two ends of the electrode assembly 20 respectively to facilitate connection to an external component.

In the above technical solution, the positive tab 40 and the first blank foil region 211 are located at the same end of the electrode assembly 20 in the extension direction W of the arc shape of the secondary battery 100, and the dimension L₈ of the overlapping region between the second insulation piece 50 and the second blank foil region 214 in the extension direction W of the arc shape of the secondary battery 100 satisfies the above relationship (0.55 mm ≤ L₈ ≤ 1.35 mm). The above arrangement can effectively block the burrs on an edge of the first negative electrode plate 23a on the one hand, the edge corresponding to the second blank foil region 214, and save material and reduce cost on the other hand.

Optionally, L₈ may be 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, or the like.

According to some embodiments of this application, along the extension direction W of the arc shape of the secondary battery 100, the positive tab 40 may be located together with the second blank foil region 214 at the same end of the electrode assembly 20.

Referring to FIG. 6, according to some embodiments of this application, a part of the second insulation piece 50 overlaps the positive active material layer 213. Along the extension direction W of the arc shape of the secondary battery 100, the dimension of an overlapping region between the second insulation piece 50 and the positive active material layer 213 is C₂, satisfying: 0 ≤ C₂ ≤ 0.5 mm.

The second insulation piece 50 covers the second blank foil region 214 and extends to the positive active material layer 213 in the extension direction W of the arc shape of the secondary battery 100, so that a part of the second insulation piece 50 overlaps the positive active material layer 213.

When C₂ is equal to 0, the second insulation piece 50 extends until the first insulation piece contacts the end face of the positive active material layer 213.

In the above technical solution, the second insulation piece 50 extends until the first insulation piece overlaps the positive active material layer 213. With the second insulation piece 50 blocking the burrs of the first negative electrode plate 23a, the risk of the burrs contacting the positive active material layer 213 is reduced.

Optionally, C₂ may be 0, 0.05 mm, 0.1 mm, 0.15 mm, 0.2 mm, 0.25 mm, 0.3 mm, 0.35 mm, 0.4 mm, 0.45 mm, 0.5 mm, or the like.

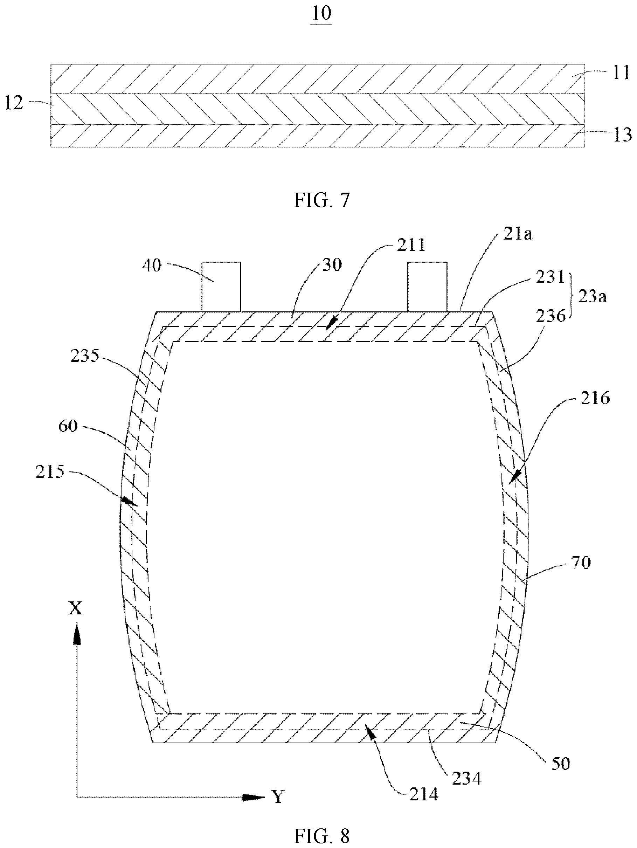

Referring to FIG. 7, according to some embodiments of this application, the housing 10 is an aluminum laminated film. The aluminum laminated film includes a protection layer 11, an aluminum layer 12, and a sealing layer 13 that are stacked together.

The protection layer 11, the aluminum layer 12, and the sealing layer 13 are stacked in sequence from outside to inside.

The protection layer 11 is made of nylon that is wear-resistant.

An aluminum laminated film is well capable of isolation, well moldable through cold stamping, resistant to puncture, and resistant and stable to an electrolyte solution, and possesses good electrical properties (including insulativity).

In the above technical solution, the aluminum plastic film is of relatively high strength and flexibility, and meets the use requirements.

According to some embodiments of this application, the sealing layer 13 includes at least one of polyethylene terephthalate, polyvinyl chloride, polyethylene, or polypropylene.

In the above technical solution, the polyethylene terephthalate, polyvinyl chloride, polyethylene, or polypropylene exhibits good sealing performance.

According to some embodiments of this application, the thickness of the sealing layer 13 is 20 µm to 40 µm.

The thickness of the sealing layer 13 may be 20 µm, 22 µm, 24 µm, 26 µm, 28 µm, 30 µm, 32 µm, 34 µm, 36 µm, 38 µm, 40 µm, or the like.

In the above technical solution, the sealing layer 13 is of a specified thickness, and can reduce the risk of the burrs contacting the aluminum layer 12. In addition, the overall thickness of the housing 10 is relatively small, thereby endowing the secondary battery 100 with a relatively high volumetric energy density.

Referring to FIG. 8, according to some embodiments of this application, the electrode assembly 20 is a stacked-type structure. The first negative electrode plate 23a further includes a second edge 234, a third edge 235, and a fourth edge 236. The second edge 234 and the first edge 231 are located at two ends of the first negative electrode plate 23a along a first direction X respectively. The third edge 235 and the fourth edge 236 are located at two ends of the first negative electrode plate 23a along a second direction Y respectively. The first direction X is perpendicular to the second direction Y A second blank foil region 214 exists on the first positive electrode plate 21a at one end close to the second edge 234. The second blank foil region 214 exceeds the second edge 234. A third blank foil region 215 exists on the first positive electrode plate 21a at one end close to the third edge 235. The third blank foil region 215 exceeds the third edge 235. A fourth blank foil region 216 exists on the first positive electrode plate 21a at one end close to the fourth edge 236. The fourth blank foil region 216 exceeds the fourth edge 236. The secondary battery 100 further includes a second insulation piece 50, a third insulation piece 60, and a fourth insulation piece 70. The second insulation piece 50 covers one side, oriented toward the first negative electrode plate 23a, of the second blank foil region 214. The third insulation piece 60 covers one side, oriented toward the first negative electrode plate 23a, of the third blank foil region 215. The fourth insulation piece 70 covers one side, oriented toward the first negative electrode plate 23a, of the fourth blank foil region 216.

Before the electrode assembly 20 is bent, both the first negative electrode plate 23a and the first positive electrode plate 21a may be square-shaped. The first edge 231 and the second edge 234 are located at the two ends of the first negative electrode plate 23a along the first direction X respectively. The first blank foil region 211 corresponds to the first edge 231. The second blank foil region 214 corresponds to the second edge 234. The first direction X may be parallel to the width direction of the first negative electrode plate 23a. The third edge 235 and the fourth edge 236 are located at the two ends of the first negative electrode plate 23a along the second direction Y respectively. The third blank foil region 215 corresponds to the third edge 235. The fourth blank foil region 216 corresponds to the fourth edge 236. The second direction Y may be parallel to the length direction of the first negative electrode plate 23a.

The width direction of the first negative electrode plate 23a is parallel to the length direction of the first positive electrode plate 21a. The length direction of the first negative electrode plate 23a is parallel to the width direction of the first positive electrode plate 21a.

The structures and arrangements of the second insulation piece 50, the third insulation piece 60, and the fourth insulation piece 70 may be the same as those of the first insulation piece 30.

In the above technical solution, the second insulation piece 50, the third insulation piece 60, and the fourth insulation piece 70 can reduce the risk of short-circuiting caused by contact between the first positive electrode plate 21a and the first negative electrode plate 23a. In addition, the second insulation piece 50 can block the burrs on the second edge 234. The third insulation piece 60 can block the burrs on the third edge 235. The fourth insulation piece 70 can block the burrs on the fourth edge 236, thereby reducing the risk of chemical corrosion caused by contact between the burrs and the aluminum layer of the housing 10, and further improving the safety performance of the secondary battery 100.

According to some embodiments of this application, the electrode assembly 20 is a jelly-roll structure.

In forming the electrode assembly 20, the positive electrode plate 21 and the negative electrode plate 23 are stacked and wound into a flat structure. Upon completion of the winding, the electrode assembly 20 is bent so that the electrode assembly 20 assumes an arc shape.

When the electrode assembly 20 is a jelly-roll structure, the first blank foil region 211 may be located at an end of the first positive electrode plate 21a in the width direction.

In the above technical solution, the electrode assembly 20 is a jelly-roll structure, thereby facilitating processing and manufacturing.

According to some embodiments of this application, the width of an outermost positive electrode plate 21 of the electrode assembly 20 is greater than the width of any other positive electrode plate 21 of the electrode assembly, or the width of the positive electrode plate 21 is greater than or equal to the width of the negative electrode plate 23.

In the above technical solution, when the width of the outermost positive electrode plate 21 is greater than the width of any other positive electrode plate 21, the first blank foil region 211 is located on the outermost positive electrode plate 21, thereby facilitating the disposition of the first insulation piece 30. The burrs of the first negative electrode plate 23a are blocked by the first insulation piece 30, thereby reducing the risk of the burrs contacting the aluminum layer of the housing 10. The width of the positive electrode plate 21 being greater than or equal to the width of the negative electrode plate 23 facilitates processing and manufacturing.

According to some embodiments of this application, this application further provides an electronic device. The electronic device contains the secondary battery 100 disclosed in any one of the above embodiments.

The electronic device is a device or system that uses the secondary battery 100 as a power supply. For example, the electronic device is a smart wearable device such as a Bluetooth headset, a wristband, or a smart watch.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A secondary battery (100), **characterized in that** the secondary battery (100) has an arc shape, and the secondary battery (100) comprises:
a housing (10), wherein the housing (10) comprises an aluminum layer (12); and
an electrode assembly (20), disposed in the housing (10), wherein the electrode assembly (20) comprises a positive electrode plate (21), a separator (22), and a negative electrode plate (23), the separator (22) is disposed between the positive electrode plate (21) and the negative electrode plate (23); an outermost electrode plate of the electrode assembly (20) is a first positive electrode plate (21a), an electrode plate adjacent to the first positive electrode plate (21a) is a first negative electrode plate (23a); the first negative electrode plate (23a) comprises a first edge (231) in an extension direction of the arc shape of the secondary battery (100), a first blank foil region (211) is provided at an end, of the first positive electrode plate (21a) towards the first edge (231), and the first blank foil region (211) exceeds beyond the first edge (231); and
a first insulation piece (30), covering one side of the first blank foil region (211), the one side of the first blank foil region (211) being oriented towards the first negative electrode plate (23a).

2. The secondary battery (100) according to claim 1, **characterized in that** the first positive electrode plate (21a) comprises a positive electrode substrate layer (212) and a positive active material layer (213) applied to a surface of the positive electrode substrate layer (212); a region, of the first positive electrode plate (21a) uncoated with the positive active material layer (213), comprises the first blank foil region (211); the first negative electrode plate (23a) comprises a negative electrode substrate layer (232) and a negative active material layer (233) applied to a surface of the negative electrode substrate layer (232); in the extension direction of the arc shape of the secondary battery (100), the negative active material layer (233) exceeds beyond the positive active material layer (213) by a dimension L₁ at one end of the electrode assembly (20) at which the first insulation piece (30) is disposed, the separator (22) disposed between the first positive electrode plate (21a) and the first negative electrode plate (23a) exceeds the negative active material layer (233) by a dimension L₂, and a dimension of the first blank foil region (211) is L₃, wherein: L₁ ≤ L₃ ≤ L₂.

3. The secondary battery (100) according to claim 2, **characterized in that** the secondary battery (100) further comprises a positive tab (40); along the extension direction of the arc shape of the secondary battery (100), the positive tab (40) and the first blank foil region (211) are located at a same end of the electrode assembly (20); and a dimension of an overlapping region between the first insulation piece (30) and the first blank foil region (211) is L₄, wherein: 1.02 mm ≤ L₄ ≤ 2 mm; and/or
a part of the first insulation piece (30) overlaps with the positive active material layer (213); and, along the extension direction of the arc shape of the secondary battery (100), a dimension of an overlapping region between the first insulation piece (30) and the positive active material layer (213) is C₁, wherein: 0 ≤ C₁ ≤ 0.5 mm.

4. The secondary battery (100) according to claim 1, **characterized in that**, along a thickness direction of the first positive electrode plate (21a), a dimension of the first insulation piece (30) is H₁, and a dimension of the separator (22) is H₂, wherein: 30 µm ≤ H₁ + H₂ ≤ 65.5 µm.

5. The secondary battery (100) according to claim 4, **characterized in that** 10 µm ≤ H₁ ≤ 40 µm.

6. The secondary battery (100) according to claim 1, **characterized in that** the first insulation piece (30) is an insulation coating applied to the first blank foil region (211), and constituents of the insulation coating comprise at least one of aluminum oxide, zinc oxide, calcium oxide, silicon oxide, zirconium oxide, magnesium oxide, titanium oxide, hafnium dioxide, tin oxide, cerium dioxide, nickel oxide, yttrium oxide, silicon carbide, aluminum hydroxide, magnesium hydroxide, calcium hydroxide, barium sulfate, or boehmite; and/or
the first insulation piece (30) is an adhesive tape bonded to the first blank foil region (211).

7. The secondary battery (100) according to claim 6, **characterized in that** peel strength between the first insulation piece (30) and the first blank foil region (211) is greater than 0.1 N/mm.

8. The secondary battery (100) according to claim 1, **characterized in that** the first positive electrode plate (21a) further comprises a second blank foil region (214); and, in the extension direction of the arc shape of the secondary battery (100), the second blank foil region (214) and the first blank foil region (211) are located at two ends of the first positive electrode plate (21a) respectively; and
the secondary battery (100) further comprises a second insulation piece (50), and the second insulation piece (50) covers one side of the second blank foil region (214). the one side of the second blank foil region (214) being oriented toward the first negative electrode plate (23a).

9. The secondary battery (100) according to claim 8, **characterized in that** the first positive electrode plate (21a) comprises a positive electrode substrate layer (212) and a positive active material layer (213) applied to a surface of the positive electrode substrate layer (212); a region-of the first positive electrode plate (21a) uncoated with the positive active material layer (213) comprises the first blank foil region (211) and the second blank foil region (214); the first negative electrode plate (23a) comprises a negative electrode substrate layer (232) and a negative active material layer (233) applied to a surface of the negative electrode substrate layer (232); in the extension direction of the arc shape of the secondary battery (100), the negative active material layer (233) exceeds beyond the positive active material layer (213) by a dimension L₅ at one end of the electrode assembly (20) at which the second insulation piece (50) is disposed, the separator (22) disposed between the first positive electrode plate (21a) and the first negative electrode plate (23a) exceeds beyond the negative active material layer (233) by a dimension L₆, and a dimension of the second blank foil region (214) is L₇, wherein: L₅ ≤ L₇ ≤ L₆.

10. The secondary battery (100) according to claim 9, **characterized in that** the secondary battery (100) further comprises a positive tab (40); along the extension direction of the arc shape of the secondary battery (100), the positive tab (40) and the first blank foil region (211) are located at a same end of the electrode assembly (20); and a dimension of an overlapping region between the second insulation piece (50) and the second blank foil region (214) is L₈, wherein: 0.55 mm ≤ L₈ ≤ 1.35 mm; and/or
a part of the second insulation piece (50) overlaps with the positive active material layer (213); and, along the extension direction of the arc shape of the secondary battery (100), a dimension of an overlapping region between the second insulation piece (50) and the positive active material layer (213) is C₂, wherein: 0 ≤ C₂ ≤ 0.5 mm.

11. The secondary battery (100) according to claim 1, **characterized in that** the housing (10) is an aluminum laminated film, and the aluminum laminated film comprises a protection layer (11), an aluminum layer (12), and a sealing layer (13) stacked together.

12. The secondary battery (100) according to claim 11, **characterized in that** the sealing layer (13) comprises at least one of polyethylene terephthalate, polyvinyl chloride, polyethylene, or polypropylene; and/or
a thickness of the sealing layer (13) is 20 µm to 40 µm.

13. The secondary battery (100) according to claim 1, **characterized in that** the electrode assembly (20) is a stacked-type structure; and
the first negative electrode plate (23a) further comprises a second edge (234), a third edge (235), and a fourth edge (236); the second edge (234) and the first edge (231) are located at two ends of the first negative electrode plate (23a) along a first direction respectively; the third edge (235) and the fourth edge (236) are located at two ends of the first negative electrode plate (23a) along a second direction respectively; the first direction is perpendicular to the second direction; a second blank foil region (214) is provided on the first positive electrode plate (21a) at a first end towards to the second edge (234); the second blank foil region (214) exceeds beyond the second edge (234); a third blank foil region (215) is provided on the first positive electrode plate (21a) at a second end towards to the third edge (235); the third blank foil region (215) exceeds beyond the third edge (235); a fourth blank foil region (216) is provided on the first positive electrode plate (21a) at a third end towards to the fourth edge (236); the fourth blank foil region (216) exceeds beyond the fourth edge (236); the secondary battery (100) further comprises a second insulation piece (50), a third insulation piece (60), and a fourth insulation piece (70); the second insulation piece (50) covers a side of the second blank foil region (214), oriented towards the first negative electrode plate (23a); the third insulation piece (60) covers a side of the third blank foil region (215), oriented towards the first negative electrode plate (23a); and the fourth insulation piece (70) covers a side of the fourth blank foil region (216), oriented towards the first negative electrode plate (23a).

14. The secondary battery (100) according to claim 1, **characterized in that** the electrode assembly (20) is a jelly-roll structure.

15. The secondary battery (100) according to claim 14, **characterized in that** a width of an outermost positive electrode plate (21) of the electrode assembly (20) is greater than a width of any other positive electrode plate (21) of the electrode assembly (20), or a width of the positive electrode plate (21) is greater than or equal to a width of the negative electrode plate (23).

16. An electronic device, **characterized in that** the electronic device comprises the secondary battery (100) according to any one of claims 1 to 14.
